(19) **Europäisches Patentamt**

**European Patent Office**

**Office européen des brevets**

(11) **EP 0 763 952 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.⁷: **H04Q 3/545**

(21) Anmeldenummer: **96113645.4**

(22) Anmeldetag: **26.08.1996**

(54) **Verfahren zum Speichern von teilnehmerbezogenen Daten in Kommunikationssystemen**

Method for storing subscriber related data in communication systems

Procédé pour le stockage de données relatives aux abonnés dans des systèmes de communication

(84) Benannte Vertragsstaaten:
**AT BE CH DE DK FI LI**

(30) Priorität: **15.09.1995 DE 19534330**

(43) Veröffentlichungstag der Anmeldung:
**19.03.1997 Patentblatt 1997/12**

(73) Patentinhaber: **SIEMENS AKTIENGESELLSCHAFT 80333 München (DE)**

(72) Erfinder: **Löbig, Norbert, Dr.rer.nat 64291 Darmstadt (DE)**

(56) Entgegenhaltungen:
**EP-A- 0 228 204          EP-A- 0 366 341
EP-A- 0 584 954**

**Beschreibung**

Die Erfindung betrifft ein Verfahren gemäß dem Oberbegriff des Patentanspruchs 1.

Die angesprochenen Kommunikationssysteme weisen nichtredundante periphere Einrichtungen auf. Dies sind beispielsweise Anschlußeinrichtungen für Teilnehmer oder für Leitungen, die Verbindungen zu weiteren Kommunikationssystemen darstellen. Weiterhin weisen Kommunikationssysteme aus wegen Zuverlässigkeitsanforderungen mindestens gedoppelte zentrale Einrichtungen auf. Dazu gehören beispielsweise die zentrale Steuereinrichtung, Koppelfelder, Protokollabschlußeinrichtungen, Hintergrundspeicher sowie Bedieneinrichtungen. Alle diese Einrichtungen sind softwaregesteuerte Ein- bzw. Mehrprozessorsysteme.

Die peripheren Einrichtungen erfüllen wesentliche, an die Sprachkanäle der jeweiligen peripheren Einrichtung gebundene vermittlungstechnische Aufgaben. Sie enthalten daher vermittlungstechnische, betriebstechnische und administrative Programme sowie die der Einrichtung zugehörige Dateninformation. Zur letzteren gehören insbesondere teilnehmerbezogene Daten, wie Daten bezüglich der Anschlußlage, der Signalisierung, der Berechtigungen und Rufnummern, ferner gehören hierzu individuelle Daten im Hinblick auf Verbindungsleitungen sowie Daten über Ausbauzustand und Konfiguration der peripheren Einrichtung. Pro 1000 Teilnehmer können so in den peripheren Einrichtungen mehrere MByte Speicherbedarf für die eben angesprochenen, teilnehmerbezogenen Daten entstehen. Ein derartiges Kommunikationssystem ist aus der Patentschrift EP 0 228 204 bekannt.

Zeitgemäße Teilnehmeranschlußnetze werden in der Regel über standardisierte Schnittstellen, im europäischen Raum insbesondere über sogenannte V5-Schnittstellen an die peripheren Einrichtungen des Kommunikationssystems angeschlossen. Pro PCM30-Strecke einer V5.2-Schnittstelle gibt es bis zu drei sogenannte V5.2-Kommunikationskanäle (communication channels, C-channels), welche vorgesehen sind, die zentralen Protokolle sowie die PSTN-Signalisierung, die ISDN-Signalisierung und die ISDN D-Kanalpaketdaten administrativ zugeordneter V5.2-Teilnehmer heranzuführen. Die peripheren Einrichtungen sind über ein i.a. gedoppeltes Nachrichtenverteilsystem untereinander und mit der gemeinsamen zentralen Steuereinrichtung verbunden, welche zentrale und koordinierende Aufgaben wahrnimmt. Eine Schnittstelle zu Teilnehmeranschlußnetzen kann in Abhängigkeit von der Anzahl der angeschlossenen Teilnehmer sowie deren Verkehrsverhalten mehr als eine PCM-Strecke umfassen (z.B. bis 16 PCM30-Systeme für V5.2-Schnittstellen im Vollausbau). Dadurch ist es unter Umständen notwendig, daß eine Vielzahl peripherer Einrichtungen für die Bereitstellung einer solchen Schnittstelle in einem Kommunikationssystem herangezogen werden muß.

Da insbesondere konzentrierende Schnittstellen, wie die V5.2-Schnittstellen, keine feste Zuordnung zwischen Teilnehmer und Sprachkanal der Schnitstelle zum Kommunikationssystem aufweisen, muß eine periphere Einrichtung des Kommunikationssystems die Gesamtheiten der Teilnehmerdaten derjenigen Schnittstellen zu Teilnehmeranschlußnetzen zur Verfügung haben, die wenigstens eine PCM-Strecke an die betreffende periphere Einrichtungen heranführen.

Aus der deutschen Patentanmeldung P 195 069 61.7 ist ein Verfahren bekannt, wie V5.2-Schnittstellen an die peripheren Einrichtungen eines Kommunikationssystems angeschlossen werden. Der Anschluß erfolgt dabei derart, daß ein durch Ausfall einer peripheren Einrichtung hervorgerufener Ausfall von den Schnittstellen zugeordneten Teilnehmern vermieden werden kann. Dies wird durch Schalten eines pro V5.2-Schnittstelle definierten logischen Kommunikationsrings erreicht, welcher physikalisch z. B. über das Koppelfeld realisiert sein kann und den intensiven Nachrichtenaustausch der peripheren Einrichtungen ermöglicht, welche Sprachkanäle der gleichen V5.2-Schnittstelle heranführen. Die teilnehmerbezogenen Daten der über eine dieser Schnittstellen angeschlossenen Teilnehmer sind als schnittstellenspezifische Gesamtheit in den peripheren Einrichtungen abgespeichert, welche Sprachkanäle der Schnittstelle heranführen. Führt eine periphere Einrichtung Sprachkanäle mehrerer Schnittstellen heran, so sind die mehreren Gesamtheiten der teilnehmerbezogenen Daten dieser Schnittstellen in dieser peripheren Einrichtung gespeichert. Problematisch an einer derartigen Vorgehensweise ist, daß jede periphere Einrichtung erhebliche Speichermittel zur Abspeicherung der teilnehmerbezogenen Daten bereithalten muß.

Der Erfindung liegt die Aufgabe zugrunde, ein Verfahren anzugeben, mit dem der durchschnittliche Speicherbedarf in den peripheren Einrichtungen eines Kommunikationssystems minimiert werden kann.

Vorteilhaft an der Erfindung ist das Abspeichern von teilnehmerbezogene Daten einer Schnittstelle in lediglich einem Teil der peripheren Einrichtungen, welche Sprachkanäle dieser Schnittstelle heranführen. Hiermit ist die mittlere, pro peripherer Einrichtung zu speichernde Anzahl von teilnehmerbezogenen Daten signifikant kleiner als der über alle peripheren Einrichtungen gebildete Durchschnitt der Summe der teilnehmerbezogenen Daten aller an die jeweilige periphere Einrichtung angeschlossenen Schnittstellen zu Teilnehmeranschlußnetzen. Damit ist der Vorteil verbunden, daß nur die teilnehmerbezogenen Daten führenden peripheren Einrichtungen mit entsprechenden Speichermitteln ausgerüstet werden müssen. Die verbleibenden peripheren Einrichtungen können dann weniger stark dimensionierte Speichermittel aufweisen. Damit wird der mittlere Speicherbedarf der peripheren Einrichtungen im Kommunikationssystem vermindert.

Vorteilhafte Ausgestaltungen der Erfindung sind in den Unteransprüchen vorgesehen:

Gemäß Anspruch 2 ist vorgesehen, daß jede der Gesamtheiten der teilnehmerbezogenen Daten der über eine der Schnittstellen angeschlossenen Teilnehmer jeweils in genau einer der peripheren Einrichtungen gespeichert wird. Hiermit ist das Verfahren auch vorteilhaft anwendbar auf Kommunikationssysteme mit gedoppelten peripheren Einrichtungen.

Gemäß Anspruch 3 ist vorgesehen, daß jede der Gesamtheiten der teilnehmerbezogenen Daten der über eine der Schnittstellen angeschlossenen Teilnehmer jeweils in genau zwei der peripheren Einrichtungen gespeichert wird. Hiermit ist das Verfahren auch vorteilhaft anwendbar auf Kommunikationssysteme mit ungedoppelten peripheren Einrichtungen, bei denen, was i. a. zutrifft, die erwünschte Ausfallsicherheit bereits durch eine doppelte Führung der Teilnehmerdatensätze in unterschiedlichen peripheren Einrichtungen erreicht wird. Damit ist der Vorteil verbunden,daß die zum Speichern erforderlichen Speichermittel in lediglich diesen peripheren Einrichtungen vorgesehen werden müssen.

Gemäß Anspruch 4 ist vorgesehen, daß das Übertragungsmedium ein System von Kommunikationsringen ist, das in einem Koppelfeld derart geschaltet ist, daß es die peripheren Einrichtungen, die mit der gleichen Schnittstelle verbunden sind, zusammenführt. Damit ist der Vorteil verbunden, daß teilnehmerbezogene Daten schnell und effizient über einen Kommunikationsring zwischen den einzelnen peripheren Einrichtungen ausgetauscht werden können.

Gemäß Anspruch 5 ist vorgesehen, daß eine teilnehmerbezogene Daten führende periphere Einrichtung, die bei der Abwicklung vermittlungtechnischer Prozesse bestimmte teilnehmerbezogene Daten benötigt, diese gegebenenfalls der systemeigenen Datenbasis entnimmt. Damit ist der Vorteil verbunden, daß der Kommunikationsring dynamisch entlastet wird.

Gemäß Anspruch 6 ist vorgesehen, daß eine periphere Einrichtung, die bei der Abwicklung von vermittlungstechnischen Prozessen bestimmte teilnehmerbezogene Daten, die sie nicht führt, benötigt, diese einem jeweils zugeordneten systemeigenen Zwischenspeicher oder alternativ der peripheren Einrichtung entnimmt, in der diese teilnehmerbezogenen Daten gespeichert sind, und in letzterem Fall diese dem jeweils zugeordneten systemeigenen Zwischenspeicher zuführt. Damit ist der Vorteil verbunden, daß die Anzahl der Speichermittel in den peripheren Einrichtungen gering gehalten werden kann.

Gemäß Anspruch 7 ist vorgesehen, daß administrative Veränderungen von teilnehmerbezogenen Daten in der Datenbasis der zentralen Steuereinrichtung vorgenommen werden, woraufhin von dieser eine Aktualisierung dieser Daten in den peripheren Datenbasen der die betreffenden teilnehmerbezogenen Daten führenden peripheren Einrichtungen durchgeführt wird sowie gegebenenfalls eine Aktualisierung oder Invalidierung dieser Daten in den peripheren Zwischenspeichern bewirkt wird. Damit ist der Vorteil verbunden, daß die peripheren Einrichtungen stets ein aktualisiertes Abbild der teilnehmerbezogenen Daten haben.

Gemäß Anspruch 8 ist vorgesehen, daß die Schnittstellen V5.2-Schnittstellen sind und die den primary link terminierende periphere Einrichtung vorzugsweise als teilnehmerbezogene Daten führende periphere Einrichtung definiert wird und ferner die den secondary link terminierende periphere Einrichtung gegebenenfalls als weitere teilnehmerbezogene Daten führende periphere Einrichtung definiert wird. Damit ist der Vorteil verbunden, daß das Speichern teilnehmerbezogener Daten in das Anschlußkonzept von V5.2- Schnittstellen eingebunden wird und der Kommunikationsbedarf zwischen den peripheren Einrichtungen und somit die Anforderung an das zugehörige Nachrichtenverteilsystem gesenkt wird.

Die Erfindung wird im folgenden anhand eines Ausführungsbeispiels näher erläutert. Es zeigen:

Figur 1     die typische Systemarchitektur eines Kommunikationssystems,

Figur 2     eine Konfiguration, in der systemweit lediglich eine periphere Einrichtung sowie aus Redundanzgründen eine weitere periphere Einrichtung teilnehmerbezogene Daten führen,

Figur 3     eine Konfiguration, in der pro Schnittstelle eine periphere Einrichtung sowie im Hinblick auf ausreichende Redundanz pro Schnittstelle eine weitere periphere Einrichtung teilnehmerbezogene Daten führen.

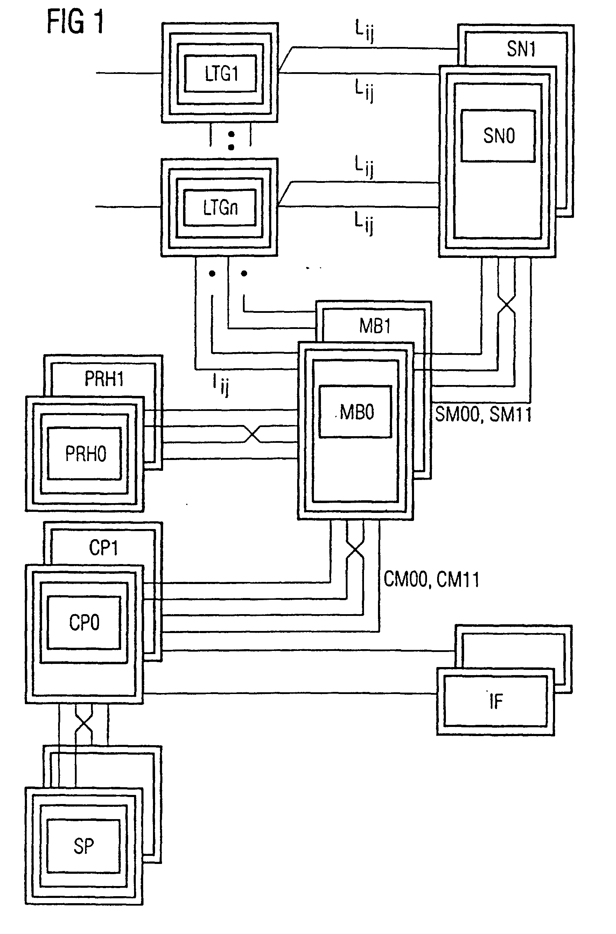

Fig. 1 zeigt die typische Systemarchitektur eines Kommunikationssystems mit ungedoppelten peripheren Einrichtungen $LTG_1 ...LTG_n$. Sie sind ausgangsseitig mit Teilnehmern bzw. weiteren Kommunikationssystemen verbunden; die von den beiden letzten ausgehenden Informationen werden von den peripheren Einrichtungen $LTG_1..LTG_n$ empfangen und über Verbindungen Lij dem redundant ausgebildeten Koppelfeld SN0, SN1 zugeführt. Weiterhin sind die peripheren Einrichtungen $LTG_1... .LTG_n$ über weitere Verbindungen Iij mit den redundant ausgebildeten Nachrichtenverteilereinheiten MB0, MB1 verbunden, die ihrerseits über weitere Verbindungen Iij zum einen mit den redundant ausgebildeten Einrichtungen zur Behandlung zentraler Protokollabschlußaufgaben PRH (z.B. zentraler Zeichenkanal für No.7 Signalisierung, Zugang zu Paketnetzen) und zum anderen mit dem Koppelfeld SN0, SN1 sowie mit der ebenfalls redundant ausgebildeten zentralen Steuereinrichtung CP0, CP1 verbunden sind. Letztere ist an einen gedoppelten Massenspeicher SP angeschlossen. Im weiteren sind an die zentrale Steuereinrichtung CP0, CP1 Interface-Einheiten IF zur Anschaltung von Bedienungselementen bzw. zur Alarmierung des Wartungspersonals vorgesehen. Das Koppelfeld SN0, SN1, die Nachrichtenverteilereinheiten MB0, MB1, die Einrichtungen zur Behandlung zentraler Protokollabschlußaufgaben PRH0, PRH1, die zentrale Steuereinrichtung CP0, CP1 sowie die Massenspeicher SP und die Interface-Einheiten IF sind somit im Kommunikationssystem jeweils gedoppelt vorgesehen. Die peripheren Einrichtungen $LTG_1...LTG_n$ hingegen sind bei vorliegendem Ausführungsbeispiel ungedoppelt ausgeführt.

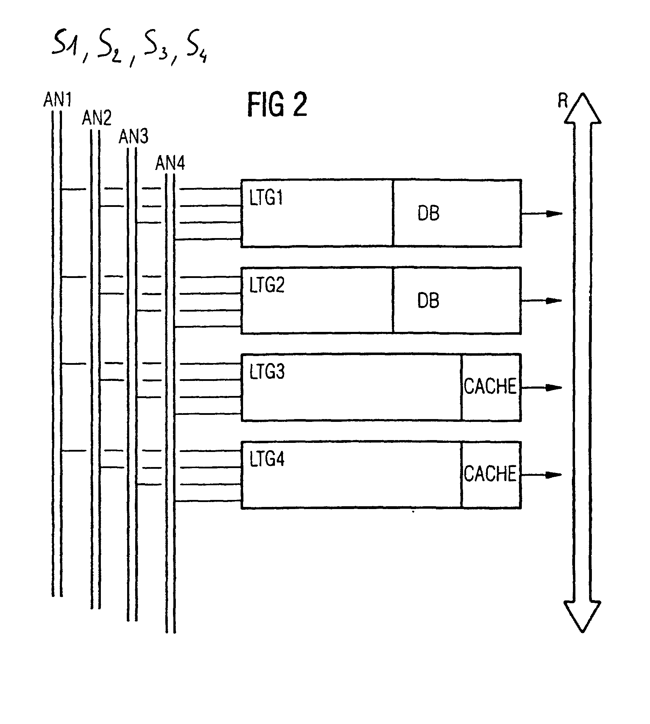

In Fig. 2 ist aufgezeigt, wie teilnehmerbezogene Daten in peripheren Einrichtungen $LTG_1...LTG_4$ abgespeichert werden. Beispielhaft wird angenommen, daß vier Teilnehmeranschlußnetze AN1...AN4 über 4 V5.2-Schnittstellen S1...S4 an das Kommunikationssystem angeschlossen sind. Dabei ist das Teilnehmeranschlußnetz AN1 über insgesamt 4 PCM30-Systeme jeweils an die peripheren Einrichtungen $LTG_1...LTG_4$ herangeführt. In gleicher Weise ist das Teilnehmeranschlußnetz AN2 über ebenfalls 4 PCM30-Systeme an die peripheren Einrichtungen $LTG_1...LTG_4$ angeschlossen. Ebenso wird mit den Teilnehmeranschlußnetzen AN3, AN4 verfahren.

Beispielhaft sei weiter angenommen, daß in der peripheren Einrichtung $LTG_1$ alle teilnehmerbezogenen Daten der über die in Frage kommenden V5.2-Schnittstellen angeschlossenen Teilnehmeranschlußnetze AN1 ... AN4 abgespeichert sind. Die Daten werden in einer Datenbasis DB dieser peripheren Einrichtung gespeichert.Aus Redundanzgründen werden diese in der peripheren Einrichtung $LTG_2$ in der dortigen systemeigenen peripheren Datenbasis DB ebenfalls gespeichert. Damit kann im Fehlerfall, d.h. insbesondere im Falle des Ausfalls der peripheren Einrichtung $LTG_1$, problemlos auf die Datenbasis DB der peripheren Einrichtung $LTG_2$ zugegriffen werden. Da in vorliegendem Ausführungsbeispiel von ungedoppelten peripheren Einrichtungen ausgegangen wurde, ist es i. a. aus Ausfallsgründen durchaus sinnvoll, die entsprechende Datenbasis DB identisch in 2 peripheren Einrichtungen abzulegen und zu führen. Die weiteren peripheren Einrichtungen - in vorliegendem Ausführungsbeispiel sind dies die peripheren Einrichtungen $LTG_3$, $LTG_4$ - weisen keinerlei Datenbasen zum Speichern teilnehmerbezogener Daten auf. Die peripheren Einrichtungen werden zur Abwicklung des pro V5.2-Schnittstelle entstehenden intensiven internen Nachrichtenaufkomens über ein leistungsfähiges Nachrichtenverteilsystem, welches z. B. ein über das Koppelfeld geschaltetes Ringsystem R sein kann, zusammengeführt. Die Ausbildung einer derartigen Konfiguration ist in der deutschen Patentanmeldung P 195 069 61.7 detailliert beschrieben.

Die peripheren Einrichtungen $LTG_3$, $LTG_4$ weisen als zusätzliche Speichermittel jeweils einen peripheren Zwischenspeicher CACHE auf. Bei der Ausführung vermittlungstechnischer Prozesse werden in der Regel teilnehmerbezogene Daten benötigt. Werden diese vermittlungstechnischen Prozesse - wie beispielsweise eine A- oder B-seitige Belegung der über eine der V5.2-Schnittstellen S1...S4 angeschlossenen Teilnehmer der Teilnehmeranschlußnetze AN1...AN4 - in der peripheren Einrichtung $LTG_1$ bearbeitet, so können die benötigten teilnehmerbezogenen Daten unmittelbar aus der systemeigenen peripheren Datenbasis DB der $LTG_1$ entnommen werden. Gleiches gilt für die Bearbeitung vermittlungstechnischer Prozesse in der peripheren Einrichtung $LTG_2$.

Werden vermittlungstechnische Prozesse - wie beispielsweise eine A- oder B-seitige Belegung der über die V5.2-Schnittstellen S1...S4 angeschlossenen Teilnehmer der Teilnehmeranschlußnetze AN1...AN4 - in der peripheren Einrichtung $LTG_3$ bearbeitet, so werden die benötigten Teilnehmerdaten der die teilnehmerbezogenen Daten führenden peripheren Einrichtung angefordert. In vorliegendem Ausführungsbeispiel ist dies die periphere Einrichtung $LTG_1$ - bzw. falls diese durch ein Fehlverhalten außer Betrieb genommen wurde, die periphere Einrichtung $LTG_2$. Die teilnehmerbezogenen Daten werden dann über das Ringsystem R zur peripheren Einrichtung $LTG_3$ übertragen, und werden dort in den systemeigenen peripheren Zwischenspeicher CACHE eingeschrieben. Gegebenenfalls werden dort aktuell nicht mehr benötigte Teilnehmerdatensätze hierdurch überschrieben. Dies bedeutet, daß unter Umständen teilnehmerbezogene Daten der Teilnehmer über längere Zeit gespeichert bleiben, die öfters benötigt werden. Dies ist in der Regel bei den Teilnehmern der Fall, die häufig telefonieren. Insofern ist es zweckmäßig, daß die den vermittlungstechnischen Verkehr abwickelnde periphere Einrichtung $LTG_3$ zunächst ermittelt, ob die benötigten teilnehmerbezogenen Daten im systemeigenen peripheren Zwischenspeicher CACHE abgespeichert sind und erst danach auf die diese Daten führende periphere Einrichtung $LTG_1$ bzw. $LTG_2$ zugreift. In diesem Fall unterbleibt dann ein Zugriff über das Ringsystem R, was dynamisch günstiger ist.

Im Falle gedoppelter und damit ausfallsicherer peripherer Einrichtungen kann auf eine derartige Doppelung der Führung teilnehmerbezogener Daten verzichtet werden. In diesem Fall wird pro Schnittstelle zu einem Teilnehmeranschlußnetz auschließlich eine periphere Einrichtung zur Abspeicherung der teilnehmerbezogenen Daten definiert. Im Falle von V5.2-Schnittstellen, welche primary und secondary link an unterschiedliche gedoppelte periphere Einheiten heranführen, kann temporär bis zur C-Kanalersatzschaltung des die V5.2-Schnittstelle steuernden C-Kanales jeweils der gedoppelten peripheren Einheit die Führung der teilnehmerbezogenen Daten der V5.2-Schnittstelle übertragen werden, die die Steuerung der V5.2-Schnittstelle - die sogenannte Masterfunktion im Hinblick auf die V5.2-Schnittstelle- übernommen hat.

Die Dimensionierung der Speichermittel erfolgt über eine optimierte Anpassung an die Menge der teilnehmerbezogenen Daten. So ist die Anzahl m1 der pro peripherer Einrichtung $LTG_1 ...LTG_n$ zulässigen Datenbasen DB für Schnittstellen zu Teilnehmeranschlußnetzen AN definiert als $\geq 0$ und $\leq$ der Anzahl m2 der möglichen PCM Abschlüsse der peripheren Einrichtung. Eine periphere Einrichtung weist nur dann eine Datenbasis DB für die teilnehmerbezogenen Daten einer Schnittstelle zu Teilnehmeranschlußnetzen auf, wenn sie mindestens eine PCM-Strecke dieser Schnittstelle terminiert. Der Teilnehmerdatenspeicher einer peripheren Einrichtung wird dann dimensioniert auf

$$m1 \times A + (m2 - m1) \times B \text{ Teilnehmerdatensätze,}$$

wobei A die maximale Anzahl der Teilnehmerdatensätze einer Schnittstelle zu Teilnehmeranschlußnetzen ist (z. B. A=4000 für eine vollausgebaute V5.2-Schnittstelle mit 16 PCM30-Strecken) und wobei $B \leq A$ eine sinnvolle Anzahl der im Mittel pro PCM-Strecke einer Schnittstelle zu Teilnehmeranschlußnetzen im CACHE zwischenzuspeichernden Teilnehmerdatensätze ist (z. B. B=250). Gemäß dem in der Figur 2 dargestellten Ausführungsbeispiel ergeben sich hiernach folgende Speicherdimensionierungen bei Anschluß von 4 V5.2-Schnittstellen mit jeweils 1000 Teilnehmern:

$LTG_1$ , $LTG_2$ jeweils 4000 Teilnehmerdatensätze (DB)
$LTG_3$ , $LTG_4$ jeweils 1000 Teilnehmerdatensätze (CACHE)

Werden teilnehmerbezogenen Daten administrativ verändert, so muß dies Veränderung allen teilnehmerbezogenen Daten führenden Einrichtungen im Kommunikationssystem mitgeteilt werden. Derartige Veränderungen können durch den Betreiber oder durch den Teilnehmer selbst initiiert werden. Zu diesem Zweck wird zunächst die Datenbasis DB der zentralen Steuereinrichtung CP die Veränderungen aufnehmen. Von dort erfolgt dann eine Aktualisierung der Teilnehmerdatensätze in den Datenbasen DB der peripheren Einrichtungen $LTG_1$, $LTG_2$. Gegebenenfalls müssen auch die Zwischenspeicher CACHE der peripheren Einrichtungen $LTG_3$, $LTG_4$ bezüglich der gennanten Veränderungen mitaktualisiert oder invalidiert werden.

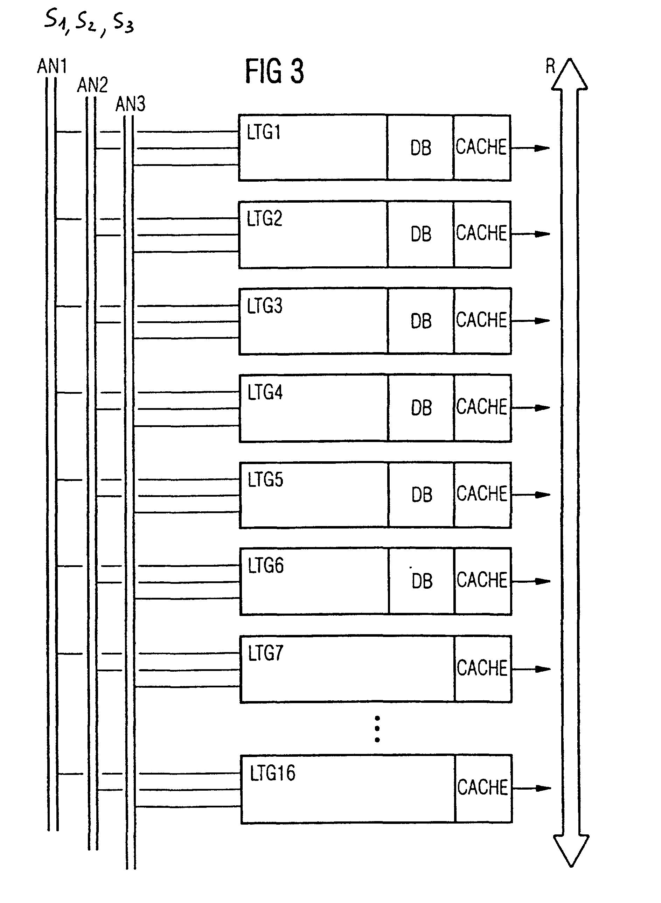

In Fig. 3 ist ein weiteres Ausführungsbeispiel aufgezeigt. Hier sind die teilnehmerbezogenen Daten von 3 vollausgebauten Schnittstellen mit jeweils 16 PCM-Strecken schnittstellenindividuell in 3 peripheren Einrichtungen und aus Redundanzgründen in 3 weiteren peripheren Einrichtungen angespeichert. Dies bedeutet, daß in der Datenbasis DB der peripheren Einrichtung $LTG_1$ die teilnehmerbezogenen Daten des Teilnehmerzugangsnetzes AN1 gespeichert sind. Als weitere periphere Einrichtung zur Speicherung dieser Daten wird die periphere Einrichtung $LTG_2$ verwendet. Somit sind in der dort vorhandenen Datenbasis DB ebenfalls die teilnehmerbezogenen Daten des Teilnehmeranschlußnetzes AN1 gespeichert, so daß im Fehlerfall auf die Datenbasis dieser peripheren Einrichtung zurückgegriffen werden kann. In der Datenbasis DB der

peripheren Einrichtung $LTG_3$ sind weiterhin die teilnehmerbezogenen Daten des Teilnehmerzugangsnetzes AN2 gespeichert. Als weitere periphere Einrichtung zur Speicherung dieser Daten dient die periphere Einrichtung $LTG_4$. In gleicher Weise sind in der Datenbasis DB der peripheren Einrichtung $LTG_5$ die teilnehmerbezogenen Daten des Teilnehmeranschlußnetzes AN3 gespeichert, während die periphere Einrichtung $LTG_6$ als weitere periphere Einrichtung diese Daten ebenfalls speichert. Die übrigen peripheren Einrichtungen $LTG_7$... $LTG_{16}$ weisen lediglich einen Zwischenspeicher CACHE auf. Analog zu der für das vorhergehende Ausführungsbeispiel aufgezeigten Speicherdimensionierung ergibt sich im vorliegenden Falle unter gleichen Annahmen folgende Speicherdimensionierung:

$LTG_1$ ... $LTG_6$ jeweils 4500 Teilnehmerdatensätze (DB + CACHE)
$LTG_7$ ... $LTG_{16}$ jeweils 750 Teilnehmerdatensätze (CACHE)

Werden V5.2-Schnittstellen an das Kommunikationssystem angeschlossen, ist es zur Minimierung des Nachrichtenaufkommens vorteilhaft, die peripheren Einrichtungen, welche den Primary Link und den Secondary Link terminieren, mit den Datenbasen DB für die Teilnehmerdatensätze der V5.2-Schnittstellen zu versehen.

Ist das Software - Upgrade des Kommunikationssystems in der Weise gelöst,daß in der Peripherie auf einen gemäß neuer Version der Software der peripheren Einrichtung mit dem neuen Programm und die neuen Daten gefüllten Hintergrundspeicher der peripheren Einrichtung umgeschaltet wird, so kann dieser im Normalbetrieb nicht genutzte Speicher für die Zwecke der Speicherung der teilnehmerbezogenen Daten verwendet werden. In jeder peripheren Einrichtung sind dann im Normalbetrieb alle relevanten Teilnehmerdatensätze verfügbar. Nach einem Software-Upgrade werden im vorliegenden Fall die Speicherbereiche für die peripheren Zwischenspeicher CACHE mit Hilfe des Hintergrundspeichers auf die volle Größe des benötigten Teilnehmerdatenspeichers erweitert und sukzessive gefüllt.

Die voranstehend erläuterten Ausführungsbeispiele zeigen die Verhältnisse, wie sie sich für v5.2-Schnittstellen darstellen. Die Anwendung des erfindungsgemäßen Verfahrens ist jedoch nicht auf V5.2-Schnittstellen beschränkt.

**Patentansprüche**

1. Verfahren zum Speichern von teilnehmerbezogenen Daten in Kommunikationssystemen, mit einer ersten Mehrzahl von Teilnehmeranschlußnetzen (AN1...ANm) die über eine zweite Mehrzahl von Schnittstellen (S1...Sk) an periphere Einrichtungen

(LTG$_1$ ...LTG$_n$) eines Kommunikationssystems angeschlossen sind, wobei das Kommunikationssystem für die über eine Schnittstelle (S1...Sk) angeschlossenen Teilnehmer pro Schnittstelle eine Gesamtheit von teilnehmerbezogenen Daten führt und wobei zwischen den einzelnen peripheren Einrichtungen (LTG$_1$...LTG$_n$) untereinander sowie zwischen diesen und einer, teilnehmerbezogene Daten führenden zentralen Steuereinrichtung (CP) über ein Übertragungsmedium Informationen ausgetauscht werden,
**dadurch gekennzeichnet,**
**daß** jede der Gesamtheiten der teilnehmerbezogenen Daten der über eine der Schnittstellen (S1...Sk) angeschlossenen Teilnehmer jeweils in mindestens einer der peripheren Einrichtungen (LTG$_1$...LTG$_n$) gespeichert wird.

2. Verfahren nach Anspruch 1,
**dadurch gekennzeichnet,**
**daß** jede der Gesamtheiten der teilnehmerbezogenen Daten der über eine der Schnittstellen (S1...Sk) angeschlossenen Teilnehmer jeweils in genau einer der peripheren Einrichtungen (LTG$_1$...LTG$_n$) gespeichert wird.

3. Verfahren nach Anspruch 1,
**dadurch gekennzeichnet,**
**daß** jede der Gesamtheiten der teilnehmerbezogenen Daten der über eine der Schnittstellen (S1...Sk) angeschlossenen Teilnehmer jeweils in genau zwei der peripheren Einrichtungen (LTG$_1$ ...LTG$_n$) gespeichert wird.

4. Verfahren nach einem der Ansprüche 1 bis 3,
**dadurch gekennzeichnet,**
**daß** das Übertragungsmedium ein System von Kommunikationsringen (R) ist, das in einem Koppelfeld derart geschaltet ist, daß es die peripheren Einrichtungen (LTG$_1$...LTG$_n$), die mit der gleichen Schnittstelle (S1...Sk) verbunden sind, zusammenführt.

5. Verfahren nach einem der Ansprüche 1 bis 4,
**dadurch gekennzeichnet,**
**daß** eine teilnehmerbezogene Daten führende periphere Einrichtung, die bei der Abwicklung vermittlungtechnischer Prozesse bestimmte teilnehmerbezogene Daten benötigt, diese gegebenenfalls der systemeigenen peripheren Datenbasis (DB) entnimmt.

6. Verfahren nach einem der Ansprüche 1 bis 5,
**dadurch gekennzeichnet,**
**daß** eine periphere Einrichtung, die bei der Abwicklung von vermittlungstechnischen Prozessen bestimmte teilnehmerbezogene Daten, die sie nicht führt, benötigt, diese einem jeweils zugeordneten systemeigenen peripheren Zwischenspeicher (CACHE) oder alternativ der peripheren Einrichtung entnimmt, in der diese teilnehmerbezogenen Daten gespeichert sind, und in letzterem Fall diese dem jeweils zugeordneten systemeigenen Zwischenspeicher (CACHE) zuführt.

7. Verfahren nach einem der vorstehenden Ansprüche,
**dadurch gekennzeichnet,**
**daß** administrative Veränderungen von teilnehmerbezogenen Daten in der Datenbasis der zentralen Steuereinrichtung (CP) vorgenommen werden, woraufhin von dieser eine Aktualisierung dieser Daten in den peripheren Datenbasen (DB) der die betreffenden teilnehmerbezogenen Daten führenden peripheren Einrichtungen durchgeführt sowie gegebenenfalls mittelbar eine Aktualisierung oder eine Invalidierung dieser Daten in den peripheren Zwischenspeichern (CACHE) bewirkt wird.

8. Verfahren nach einem der vorstehenden Ansprüche,
**dadurch gekennzeichnet,**
**daß** die Schnittstellen V5.2-Schnittstellen sind und die den primary link terminierende periphere Einrichtung vorzugsweise als teilnehmerbezogene Daten führende periphere Einrichtung definiert und die den secondary link terminierende periphere Einrichtung gegebenenfalls als weitere teilnehmerbezogene Daten führende periphere Einrichtung definiert wird.

**Claims**

1. Method for storing subscriber-related data in communication systems, having a first plurality of subscriber connection networks, which are connected to peripheral installations (LTG$_1$...LTG$_n$) of a communication system via a second plurality (AN1... ANm) of interfaces (S1...Sk), whereby the communication system for the subscribers connected via an interface (S1...Sk) stores subscriber-related data for each interface, and whereby information is exchanged, via a transmission medium, between the individual peripheral installations (LTG$_1$...LTG$_n$), and between these and a central control installation (CP) that stores subscriber-related data,
**characterized in that**
each of the subscriber-related data of the subscribers connected via one of the interfaces (S1...Sk) is stored in at least one of the peripheral installations (LTG$_1$...LTG$_n$).

2. Method according to Claim 1,
**characterized in that**
each of the subscriber-related data of the subscribers connected via one of the interfaces (S1...Sk) is stored in only one of the peripheral installations ($LTG_1...LTG_n$).

3.  Method according to Claim 1,
    **characterized in that**
    each of the subscriber-related data of the subscribers connected via one of the interfaces (S1...Sk) is stored in only two of the peripheral installations ($LTG_1...LTG_n$).

4.  Method according to one of Claims 1 to 3,
    **characterized in that**
    the transmission medium is a system of communication rings (R), connected in a coupling field such that the coupling field interconnects the peripheral installations ($LTG_1...LTG_n$) that are connected to the common interface (S1...Sk).

5.  Method according to one of Claims 1 to 4,
    **characterized in that**
    a peripheral installation, which stores subscriber-related data and which requires particular subscriber-related data during execution of switching-oriented processes, takes such data as appropriate from the system-inherent peripheral database (DB).

6.  Method according to one of Claims 1 to 5,
    **characterized in that**
    a peripheral installation which, during the execution of switching-oriented processes, requires particular subscriber-related data that the said peripheral installation does not store, takes such data from an allocated system-inherent peripheral intermediate memory (CACHE) or from the peripheral installation in which such subscriber-related data is stored, and which, in the latter case, supplies such data to the allocated system-inherent intermediate memory (CACHE).

7.  Method according to one of the above claims,
    **characterized in that**
    the administrative alterations of subscriber-related data are carried out in the database of the central control installation (CP), whereupon an updating of such data is carried out by said control installation in the peripheral databases (DB) of the peripheral installations that store the relevant subscriber-related data, and **in that** as appropriate the said control installation also indirectly effects an updating or an invalidation of such data in the peripheral intermediate memories (CACHE).

8.  Method according to one of the above claims,
    **characterized in that**
    the interfaces are V5.2 interfaces, and **in that** the peripheral installation that terminates the primary link is preferably defined as a peripheral installation that stores subscriber-related data, and **in that** the peripheral installation that terminates the secondary link is defined as a further peripheral installation that stores subscriber-related data.

## Revendications

1.  Procédé pour la mémorisation de données relatives aux abonnés dans des systèmes de communication, avec une première pluralité de réseaux de branchements d'abonnés (AN1 ... ANm) qui sont connectés à des dispositifs périphériques ($LTG_1$ ... $LTG_n$) d'un système de communication par l'intermédiaire d'une deuxième pluralité d'interfaces (S1 ...Sk), le système de communication pour les abonnés connectés par l'intermédiaire d'une interface (S1 ... Sk) menant une totalité de données relatives aux abonnés par interface, et des informations étant échangées entre chacun des dispositifs périphériques ($LTG_1$ ... $LTG_n$) ainsi qu'entre ceux-ci et un dispositif de commande (CP) central menant des données relatives aux abonnés par l'intermédiaire d'un milieu de transmission,
    **caractérisé en ce que**
    chacune des totalités des données relatives aux abonnés des abonnés connectés au moyen de l'une des interfaces (S1 ... Sk) est respectivement mémorisée dans au moins un des dispositifs périphériques ($LTG_1$ ... $LTG_n$).

2.  Procédé selon la revendication 1,
    **caractérisé en ce que**
    chacune des totalités des données relatives aux abonnés des abonnés connectés au moyen de l'une des interfaces (S1 ... Sk) est respectivement mémorisée dans exactement un des dispositifs périphériques ($LTG_1$ ... $LTG_n$).

3.  Procédé selon la revendication 1,
    **caractérisé en ce que**
    chacune des totalités des données relatives aux abonnés des abonnés connectés au moyen de l'une des interfaces (S1 ... Sk) est respectivement mémorisée dans exactement deux des dispositifs périphériques ($LTG_1$ ... $LTG_n$).

4.  Procédé selon l'une quelconque des revendications 1 à 3,
    **caractérisé en ce que**
    le milieu de transmission est un système de boucles de communication (R) qui est commuté dans un champ de couplage de telle manière que celui-ci regroupe les dispositifs périphériques ($LTG_1$ ... $LTG_n$) connectés au moyen de la même interface (S1 ... Sk).

5.  Procédé selon l'une quelconque des revendications 1 à 4,
**caractérisé en ce**
**qu'**un dispositif périphérique menant des données relatives aux abonnés, qui nécessite certaines données relatives aux abonnés lors du déroulement de processus de commutation technique, prélève celles-ci éventuellement à la base de données (DB) périphérique propre au système.

6. Procédé selon l'une quelconque des revendications 1 à 5,
**caractérisé en ce**
**qu'**un dispositif périphérique qui, lors du déroulement de processus de commutation technique, nécessite certaines données relatives aux abonnés, qu'il ne mène pas, les prélève à une mémoire intermédiaire (CACHE) périphérique propre au système, respectivement attribuée, ou alternativement au dispositif périphérique, dans lequel ces données relatives aux abonnés sont mémorisées, et, dans ce dernier cas, amène celles-ci à la mémoire intermédiaire (CACHE) propre au système, respectivement attribuée.

7. Procédé selon l'une quelconque des revendications précédentes,
**caractérisé en ce que**
les modifications administratives de données relatives aux abonnés sont exécutées dans la base de données du dispositif de commande (CP) central, sur quoi une actualisation de ces données dans les bases de données périphériques (DB) des dispositifs périphériques menant les données concernées relatives aux abonnés est réalisée par ce dispositif de commande central ainsi qu'une actualisation ou une invalidation de ces données a lieu, le cas échéant, indirectement dans les mémoires intermédiaires (CACHE) périphériques.

8. Procédé selon l'une quelconque des revendications précédentes,
**caractérisé en ce que**
les interfaces sont des interfaces V5.2 et **en ce que** le dispositif périphérique terminant le lien primaire est défini de préférence comme dispositif périphérique menant des données relatives aux abonnés et **en ce que** le dispositif périphérique terminant le second lien est, le cas échéant, défini comme autre dispositif périphérique menant des données relatives aux abonnés.

## FIG 1

LTG1

$L_{ij}$

$L_{ij}$

SN1

SN0

LTGn

$L_{ij}$

$L_{ij}$

MB1

PRH1

$L_{ij}$

MB0

PRH0

SM00, SM11

CP1

CP0

CM00, CM11

IF

SP

$S1, S_2, S_3, S_4$

## FIG 2

AN1

AN2

AN3

AN4

R

| LTG1 | DB |
| LTG2 | DB |
| LTG3 | CACHE |
| LTG4 | CACHE |

$S_1, S_2, S_3$

AN1

AN2

AN3

FIG 3

R

| LTG1 | DB | CACHE |
| LTG2 | DB | CACHE |
| LTG3 | DB | CACHE |
| LTG4 | DB | CACHE |
| LTG5 | DB | CACHE |
| LTG6 | DB | CACHE |
| LTG7 | | CACHE |

⋮

| LTG16 | | CACHE |